(19) **Europäisches Patentamt European Patent Office Office européen des brevets**

(11) **EP 1 735 408 B1**

(12) **EUROPEAN PATENT SPECIFICATION**

(45) Date of publication and mention of the grant of the patent:
**06.10.2021 Bulletin 2021/40**

(51) Int Cl.:
*C10G 11/05* (2006.01)    *B01J 29/06* (2006.01)
*B01J 29/83* (2006.01)    *B01J 27/18* (2006.01)

(21) Application number: **05731372.8**

(22) Date of filing: **31.03.2005**

(86) International application number:
**PCT/US2005/010603**

(87) International publication number:
**WO 2005/097950 (20.10.2005 Gazette 2005/42)**

(54) **CATALYST COMPOSITIONS COMPRISING METAL PHOSPHATE BOUND ZEOLITE AND METHODS OF USING SAME TO CATALYTICALLY CRACK HYDROCARBONS**

METALLGEBUNDENEN ZEOLITH ENTHALTENDE KATALYSATORZUSAMMENSETZUNGEN UND VERFAHREN ZU DEREN VERWENDUNG ZUM KATALYTISCHEN CRACKEN VON KOHLENWASSERSTOFFEN

COMPOSITIONS DE CATALYSE COMPRENANT UN ZEOLITE LIE A UN PHOSPHATE DE METAL ET PROCEDES UTILISANT CES COMPOSITIONS POUR CRAQUER DE MANIERE CATALYTIQUE DES HYDROCARBURES

(84) Designated Contracting States:
**AT BE BG CH CY CZ DE DK EE ES FI FR GB GR HU IE IS IT LI LT LU MC NL PL PT RO SE SI SK TR**

(30) Priority: **02.04.2004 US 817069**

(43) Date of publication of application:
**27.12.2006 Bulletin 2006/52**

(73) Proprietor: **W.R. GRACE & CO.-CONN. Columbia, MD 21044 (US)**

(72) Inventor: **KUMAR, Ranjit Clarksville, MD 21029 (US)**

(74) Representative: **BRP Renaud & Partner mbB Rechtsanwälte Patentanwälte Steuerberater Königstraße 28 70173 Stuttgart (DE)**

(56) References cited:
EP-A- 0 623 574    EP-A- 0 903 178
EP-A- 0 909 582    US-A- 3 354 096
US-A- 5 380 690    US-A- 6 159 887

• DATABASE WPI Section Ch, Week 199429 Derwent Publications Ltd., London, GB; Class H04, AN 1994-237785 XP002343798 & JP 06 170233 A (SHOKUBAI KASEI KOGYO KK) 21 June 1994 (1994-06-21)
• None

**Description**

BACKGROUND

The present invention relates to improved catalysts, and more specifically to catalytic cracking catalysts comprising zeolite and metal phosphate that are particularly selective for the production of $C_3$ and $C_4$ olefins.

Catalysts and zeolites that include a phosphorus component are described in the following references.

U.S. Pat. No. 3,354,096 describes zeolite-containing adsorbent and catalyst compositions that contain a phosphate binding agent to improve physical strength.

U.S. Pat. No. 3,649,523 describes hydrocracking catalysts that comprise a zeolite and an aluminum phosphate gel matrix.

U.S. Pat. Nos. 4,454,241, 4,465,780, 4,498,975 and 4,504,382 describe zeolite catalysts that are prepared from clay which are further modified by the addition of a phosphate compound to enhance catalytic activity.

U.S. Pat. Nos. 4,567,152, 4,584,091, 4,629,717 and 4,692,236 describe zeolite-containing catalytic cracking catalysts that include phosphorus-containing alumina.

U.S. Pat. Nos. 4,605,637, 4,578,371, 4,724,066 and 4,839,319 describe phosphorus and aluminum phosphate modified zeolites such as ZSM-5, Beta and ultrastable Y that are used in the preparation of catalytic compositions, including catalytic cracking catalysts.

U.S. Pat. No. 4,765,884 and U.S. Pat. No. 4,873,211 describe the preparation of cracking catalysts which consist of a zeolite and a precipitated alumina phosphate gel matrix.

U.S. Pat. No. 5,194,412 describes preparing a cracking catalyst that contains zeolite and an aluminum phosphate binder.

EP-A-0903178 discloses a pentasil-type molecular sieve composition and its preparation method. In particular the composition essentially comprises 85 to 98% wt of pentasil-type molecular sieve, 1 to 10% wt of $P_2O_5$, 0.3 to 5%wt of alkaline earth oxide and 0.3 to 5%wt of transition metal oxide. When applied as the cracking catalyst for catalytic pyrolysis, the yield of ethylene is above 18% and propylene is more than 40%.

JP-A-06/170233 discloses a fluidized bed catalytic cracking catalyst comprising zeolite and rare earth phosphate dispersed in an inorganic oxide matrix. EP-A-0623574 discloses a basic lithium phosphate catalyst for isomerization of alkene oxides. US 6159887 discloses a catalytic cracking composition containing at least one agent causing the inactivation of vanadium. US 5380690 and EP-A-0909582 disclose cracking catalysts for the production of light olefins.

SUMMARY OF THE INVENTION

It is an object of the present invention to provide improved catalytic compositions, especially fluidized cracking catalysts, that comprise a zeolite, aluminum phosphate and metal phosphate that is present in an amount sufficient for it to at least function as a binder for the zeolite and the metal is other than aluminum, as defined in the claims. The zeolite/metal phosphate binder-containing cracking catalysts are selective for the production of light olefins, e.g., $C_3$ and $C_4$ olefins, and further, that selectivity is enhanced compared to the activity of catalysts that do not contain such binders.

Aluminum phosphate binders described in U.S. 5,194,412 and catalysts made from those binders have been shown to be useful in enhancing olefin yields in such processes. The new metal phosphate binders described herein offer additional choices to enhance olefin yields, and catalysts comprising metal phosphate binder, e.g., iron phosphate, unexpectedly enhance yields with respect to certain olefins.

According to one embodiment of the invention, there is provided a catalyst composition comprising

(a) zeolite which is ZSM-5 having a silica to alumina molar ratio of twelve or greater;
(b) metal phosphate present in an amount of at least 3% by weight of the catalyst composition, as measured by amount of the metal's corresponding oxide in the composition, which amount is sufficient for the metal phosphate to at least function as a binder for the catalyst, and the metal is selected from iron, lanthanum and calcium, wherein the corresponding oxide is $Fe_2O_3$, $La_2O_3$ or $CaO$; and
(c) aluminum phosphate; and
(d) clay

wherein the catalyst composition is particulated.

According to another embodiment of the invention, there is provided a method for catalytic cracking of hydrocarbons that comprises reacting a hydrocarbon under catalytic cracking conditions in the presence of a catalyst composition of the invention.

BRIEF DESCRIPTION OF THE DRAWING

Figure 1 is a schematic flow diagram that illustrates a suitable process for preparing the catalysts of the present invention.

Figure 2 is the $^{31}$P NMR spectrum of the sample (Fe) from Example 1 with peaks at -6, -15, -32, -43, and —49 parts per million (ppm), with the —32 peak attributed to an $AlPO_4$ site.

Figure 3 is the $^{31}$P NMR spectrum of the sample (Ca) from Example 2 with peaks at 0, -11, -14, -32, and —43 ppm, with the —32 peak attributed to an $AlPO_4$ site.

Figure 4 is the $^{31}$P NMR spectrum of the sample (Ca) from Example 3 with peaks at 0, -11, -14, -32, and —43 ppm, with —32 peak attributed to an $AlPO_4$ site.

Figure 5 is the $^{31}$P NMR spectrum of the sample (Ca) from Example 4 with peaks at 0, -11, -14, -32, and —43 ppm, with the —32 peak attributed to an $AlPO_4$ site.

Figure 6 is the $^{31}$P NMR spectrum of the sample (Al) from Example 5 with a peak at —32 ppm attributed to an $AlPO_4$ site.

Figure 7 is the $^{31}$P NMR spectrum of the sample (Sr) from Example 6 with peaks at 1, -9, -32, and —43 ppm, with the —32 peak attributed to an $AlPO_4$ site.

Figure 8 is the $^{31}$P NMR spectrum of the sample (La) from Example 7 with peaks at 0, -6, -32, and -43 ppm, with the —32 peak attributed to an $AlPO_4$ site.

Figure 9 is the $^{31}$P NMR spectrum of the sample (Mg) from Example 8 with peaks at -2, -11, -14, -32, and —43 ppm, with the —32 peak attributed to an $AlPO_4$ site.

DETAILED DESCRIPTION OF THE INVENTION

The catalyst composition of this invention comprises zeolite and a metal phosphate that is present in an amount of at least 3% by weight of the catalyst composition, which amount is sufficient to at least function as a binder for the zeolite. It has been found that these compositions are highly active catalysts suitable for enhancing yields of light olefins when cracking hydrocarbon feed streams.

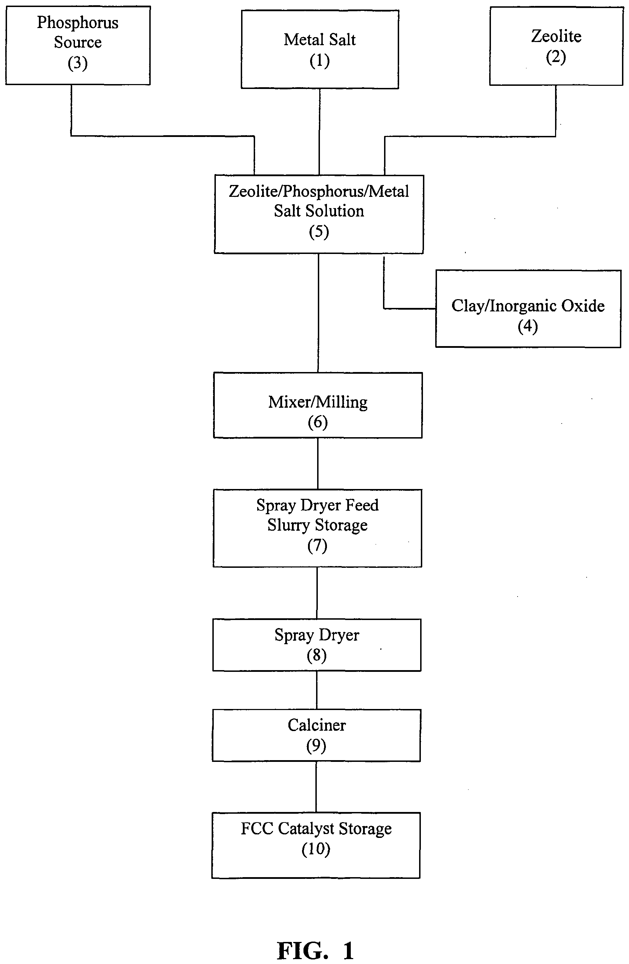

As illustrated in Figure 1, the catalysts of this invention may be prepared by mixing in water a metal salt (1), which is other than an aluminum salt, and one or more zeolite or sieve (2), and then adding a source of phosphorus (3), e.g., phosphoric acid, and optionally a finely divided particulate inorganic oxide component (4), including, but not limited to, clay and alumina. The resulting slurry (5) can then be processed to obtain bound catalytic composites having desired properties, shape and size. Figure 1 schematically illustrates processing the resulting slurry in a mixer (6) and spray drier (8) to form the desired bound catalyst composition.

In the catalysts of the present invention, zeolite (2) is added as a powder to an aqueous metal salt solution (1) that is other than an aluminum salt to form a slurry, which said slurry is combined with phosphoric acid solution that serves as the phosphorus source (3). Clay (4) is added to the slurry. The resulting slurry is then subjected to high shear mixing and milling conditions at (6) to obtain a spray drier feed slurry that is either stored at (7) and/or spray dried at (8). It is also suitable to add metal salt powder and zeolite powder to a phosphoric acid solution, and then adding additional water to form the zeolite/phosphorus/metal salt solution and slurry (5) prior to adding clay and mixing at (6).

The conditions of adding the aforementioned components and processing the same are selected to form the desired metal phosphate binder in form suitable for use as a catalyst. Such conditions are well known. For example, the pH of the resulting mixture of zeolite, metal salt, phosphorus, and optional clay, other inorganic oxides, and water can be made to have a pH of below 7 preferably below 5 and more preferably below 3. In certain instances, pH's higher than 7 could result in metal phosphate precipitating out of the slurry thereby preventing a binder from being formed when spray dried.

When spray drying the slurry from (5) to form the catalyst, it is common to spray dry the slurry at gas inlet/outlet temperatures of 300° to 400°C and 100° to 200°C, respectively. The slurry is typically spray dried to have a mean particle size range of 20 to 150 microns and is typically held in a storage container, e.g., such as (10) in Figure 1, prior to use.

While spray drying is generally used to prepare FCC catalysts, other forming/drying techniques such a pelletizing and extruding may be used to prepare compositions that are useful in other catalytic processes such as hydrocracking, hydrotreating, isomerization, dewaxing, etc. Such catalyst forms can be used in fixed bed and/or moving bed applications. Techniques suitable for extruding and pelletizing these compositions are well known to those skilled in the art. For example, the feed composition into an extruder or pelletizer generally is the same as that for a spray drier, except that the solids content of a spray drier feed is generally higher than the feed paste for an extruder.

Typically, the catalyst of this invention has a total matrix surface of less than 100 $m^2$/g, or more typically less than 70 $m^2$/g, as measured by BET techniques. When an additional porous inorganic oxide matrix component, such as silica, alumina, magnesia or silica-alumina sols or gels, is added to the catalyst, the matrix component of the invention may have a surface area of up to 300 $m^2/g$.

The catalyst of this invention also is generally made to possess a Davison Attrition Index (DI) of 0 to 30, and preferably 0 to 20, and more preferably from 0 to 15 as determined by the Davison Attrition Index Test described as follows.

After being calcined in a muffle furnace for two hours at 538°C, a 7.0 gram sample of catalyst is screened to remove particles in the 0 to 20 micron size range. The particles above 20 microns are then subjected to a 1 hour test in a standard Roller Particle Size Analyzer using a hardened steel jet cup having a precision bored orifice. An air flow of 21 liters a minute is used. The Davison Index is calculated as follows:

$$\text{Davison Index } = \frac{\textbf{Wt. \% 0-20 micron material formed during test}}{\textbf{Wt. Original 20 + micron fraction}}$$

In general, the components selected to use in the above processes should be those that do not invariably prevent formation of the aforementioned metal phosphate binder. The metal for the metal salt is selected from iron, lanthanum and calcium and reacts with a phosphorus source to form a compound suitable for functioning or otherwise serving as a binder for zeolite. The metal salt, and of course the phosphorus source, should be added in amounts sufficient to prepare a metal phosphate binder for the zeolite. Generally, the amount of phosphorus should be sufficient to convert all of the metal in the salt to phosphate and aluminum in the zeolite to $AlPO_4$. To insure sufficient conversion, it is usually desirable to include 0.5 to 1.5% excess phosphoric acid when phosphoric acid is used as the phosphorus source. The amount of phosphorus source used to make the invention also depends on whether aluminum-containing materials other than zeolite and clay are present in the composition. Larger amounts of phosphorus are typically added when such aluminum-containing materials are present.

By "binder", it is meant a material that provides the function of binding together or adhering the various components of the catalyst composition, especially the zeolite, in a manner such that the resulting composition does not readily disintegrate or break up during a catalytic cracking process. The catalyst of this invention is especially suitable for use as a FCC catalyst, and therefore, it is desirable for the composition of this invention to have attrition properties such that the composition does not readily disintegrate under conventional FCC conditions. For the purposes of this invention, the metal phosphate comprises at least 3% by weight of the catalyst composition, as measured by the amount of oxide of the metal in the metal phosphate using ICP. For the purposes of this invention percentages of metal phosphate reported herein are based on the weight % of the metal's corresponding oxide as measured using ICP techniques. Typically, the composition comprises the metal phosphate in an amount ranging from 4 to 50% by weight of the catalyst composition, as determined by the amount of the metal's corresponding oxide.

The metal salt used to make the invention may be metal nitrate, chloride, or other suitable soluble metal salts. The metal salt could also be a mixture of two or more metal salts where the two or more metals are capable of forming phosphates. It is believed an interpenetrating network of two or more phosphates are formed, with both phosphates serving as binders. The metal salt is combined with a source of phosphorus and zeolite in amounts to obtain a M (is a cation) to $PO_4$ ratio of 0.5 to 2.0 and preferably 1 to 1.5, a pH of below 7 and preferably below 5, more preferably below 3, and a solid concentration of 4 to 25 wt. % as metal phosphate. The metal is selected from iron (suitably ferric iron), lanthanum and calcium. In general, the metal salt is usually in the form of a metal salt solution when combining it with the zeolite. However, as mentioned above, it is also suitable to add the metal salt as a powder to the phosphoric acid solution and then later adding water to adjust the concentration of the metal salt to the desired levels.

The phosphorus source should be in a form that will ultimately react with the aforementioned metal to form a metal phosphate binder. For example, the phosphorus source in typical embodiments should be one that remains soluble prior to being spray dried. Otherwise, if the phosphorus source or its resulting phosphate precipitates out of solution prior to spray drying, it will not result in a binder being formed during spray drying. In typical embodiments, the phosphorus source will be phosphoric acid. Another suitable phosphorus source is $(NH_4)H_2PO_4$.

The zeolite may be ZSM-5 having a silica to alumina molar ratio in excess of 12. ZSM-5 is described in U.S. Pat. No. 3,702,886.

The zeolite and/or sieve may be slurried first with water prior to adding the metal salt. The zeolite and/or sieve may be added as a powder to phosphoric acid or a metal salt solution.

A clay, such as kaolin clay having a surface area of 2 to 50 $m^2/g$, is included as a component of catalysts designed for FCC processes. The catalyst of this invention may also comprise additional finely divided inorganic oxide components such as other types of clays, silica, alumina, silica-alumina gels and sols. Other suitable optional components include yttria, lanthana, ceria, neodymia, samaria, europia, gadolinia, titania, zirconia, praseodymia and mixtures thereof. When used, the additional materials are used in an amount which does not significantly adversely affect the performance of the compositions to produce olefins under FCC conditions, the hydrocarbon feed conversion or product yield of the catalyst. Typical amounts of additional materials that can be present in the invention range from 0 to 25% by weight of the total composition.

The catalyst may also comprise binders in addition to the aforementioned metal phosphate. For example, materials can be added to the mixture in mixer (6) of Figure 1 such that a second binder is formed in addition to the metal phosphate binder. Suitable additional binders include, but are not limited to, colloidal alumina, colloidal silica, colloidal aluminum silicate and aluminum phosphate such as the aluminum phosphate binders described in U.S. 5,194,412. With respect to the preparing a second binder of aluminum phosphate, alumimum phosphate binder precursors are added to mixer (6) and the aluminum phosphate binder forms at about the same time as the metal phosphate binder described herein. The colloidal based binders are generally formed by adding the colloidal dispersions to the mixture in (6).

The metal phosphate formed during the processing stages (6) through (8) of Figure 1 is set as a binder when the composition is exposed to temperatures of at least 200°C. Therefore the binder of this invention is typically formed by calcining the processed, e.g., spray dried, composition at temperatures of at least 200°C, and preferably at a temperature in the range of 400° to 800°C. Formation of the metal phosphate binder can be confirmed by the presence of a metal-phosphate bond as shown in an NMR analysis run under conditions described later below. Typically, the catalyst composition is calcined after spray drying and prior to the catalyst being used, e.g., as illustrated at (9) in Figure 1. In certain other embodiments, however, the composition may not be calcined prior to being used. In those embodiments the metal phosphate binder is set when it is exposed to the temperatures prevailing during the catalytic process, and any subsequent catalyst regeneration processes. However, caution should normally be taken to avoid exposing an uncalcined composition to water prior to use. Exposure of these embodiments to significant amounts of water prior to use will likely lead to significant disintegration of the composition.

Typically, the catalyst composition contains relatively small amounts of aluminum phosphate, i.e. regardless of whether a second binder comprising aluminum phosphate is employed. Typically, the composition contains silica- and alumina-containing zeolites, and it is believed that during the manufacture of the invention, zeolite is dealuminated and the resulting alumina will react with the phosphorus in the phosphorus source to form aluminum phosphate. The amount of aluminum phosphate present therefore depends on how much aluminum is present in the zeolite. For example, compositions of this invention containing low silica to alumina ratio zeolites can have more aluminum phosphate than embodiments containing relatively high silica to alumina ratio zeolites. Alumina can also be present in optional binders and/or additives, e.g., colloidal alumina, and alumina in these materials can also provide source of aluminum to form aluminum phosphate. Unless added as a secondary binder or sieve, the amount of aluminum phosphate generally will be less than the amount of metal phosphate binder present in the catalyst composition. Typically, the catalyst contains less than 10% by weight aluminum phosphate.

A typical catalyst composition prepared for use in FCC processes will include the following range of ingredients:

| | |
|---|---|
| Metal Phosphate (Measured As Metal Oxide) | 4 to 50 wt. % |
| Zeolite and Optional Molecular Sieve: | 2 to 80 wt. % |
| Optional Inorganic Solid: | 0 to 88 wt. % |

Preferred FCC catalysts under this invention contain from 5 to 60 wt. % ZSM 5, > 0 to 78 wt. % kaolin, and 4 to 40 wt. % metal phosphate.

The catalyst may be used in a conventional FCC unit wherein the catalyst is reacted with a hydrocarbon feedstock at 400° to 700°C. and regenerated at 500° to 850°C. to remove coke. The feedstocks for such processes include, but are not limited to, gas-oil, residual oil and mixtures thereof which may contain up to 10 wt. % Conradson Carbon and 0-500 ppm Ni & V. The amount of metals depends on the type of feed and other processes that have been run on the feedstock before processing the feed with the composition of this invention.

The catalyst may also be used in fixed bed and moving bed catalytic cracking processes. The catalyst for these processes is generally in extrudate or pellet form, and those catalysts typically have parameters on the magnitude of 0.5 to 1.5mm in diameter to 2-5mm in length.

The amount of olefins produced and the ratios of specific olefins produced will depend on a number of factors, including but not limited to, the type and metals content of the feed being processed, the cracking temperature, the amount of olefins producing additives used, and the type of cracking unit, e.g., FCC versus a deep catalytic cracking (DCC) unit. Based on data on cracked products from a Davison Circulating Riser, the anticipated cracked product stream obtained, using these preferred catalysts, will typically contain from 8 to 40 wt. % $C_3$ and $C_4$ olefins.

Having described the basic aspects of the invention, the following specific examples are given merely to illustrate the preferred embodiments of the invention and are not intended to a limit in any way the claims appended hereto.

EXAMPLES

Example 1-Preparation of a Ferric Phosphate Bound Zeolite

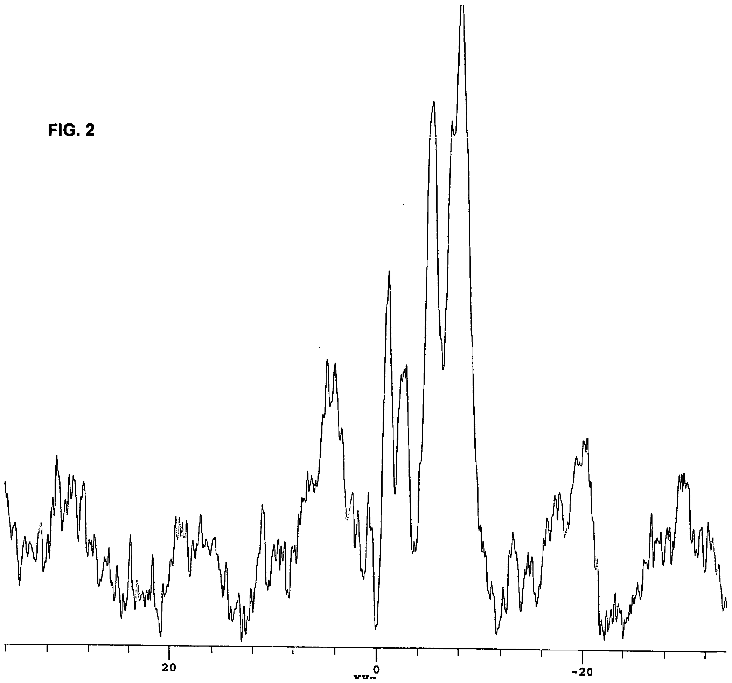

1690g of $FeCl_3.6H_2O$ was dissolved in 7000g $H_2O$. To this aqueous solution was added 2000g ZSM-5 (the amount of ZSM 5 in this Example and the amounts reported in the Examples that follow being reported on a dry basis). The resulting slurry was mixed and heated to 80°C for one hour. 856g of phosphoric acid was then added and stirred. 1880g of kaolin clay (the amount of clay in this Example and the amounts reported in the Examples that follow being reported on a dry basis) was added to the slurry and mixed for five minutes prior to milling the slurry. The slurry was milled in a Drais mill. The pH of the slurry was 0.03. The resulting milled slurry was then spray dried at an inlet temperature and outlet temperature of 399°C and 149°C, respectively to form particles having a mean particle size reported in Table 1. The spray dried catalyst particles were then calcined for forty minutes at 593°C in a lab muffle. The content of the catalyst prepared in this example and various properties of the catalyst, such as average (mean) particle size, average bulk density, etc., are provided in Table 1 below. The sample prepared according to this Example 1 was also subjected to nuclear magnetic resonance analysis to confirm the formation of the metal phosphate. The results appear in FIG. 2. The conditions for running the NMR for this sample and those described herein are as follows. The $^{31}$P nuclear magnetic resonance (NMR) experiments were performed on a Chemagnetics Infinity 400 MHz solid-state spectrometer (magnetic field 9.4T) operating at a resonance frequency of 161.825 MHz. A 4 mm Chemagnetics pencil probe was utilized to acquire all of the data. Samples were spun at 12 kHz. Samples were referenced to an external 85% $H_3PO_4$ solution. All data was acquired using a bloch decay sequence. A pulse length of 4 $\mu$s and a recycle delay of 30 seconds were utilized for all samples. One hundred twenty eight (128) acquisitions were performed on all samples except $FePO_4$ in this Example 1 for which 8000 acquisitions were performed. Fourier Transformation was applied to all time data to obtain the displayed spectra.

Example 2-Preparation of a Calcium Phosphate Bound Zeolite

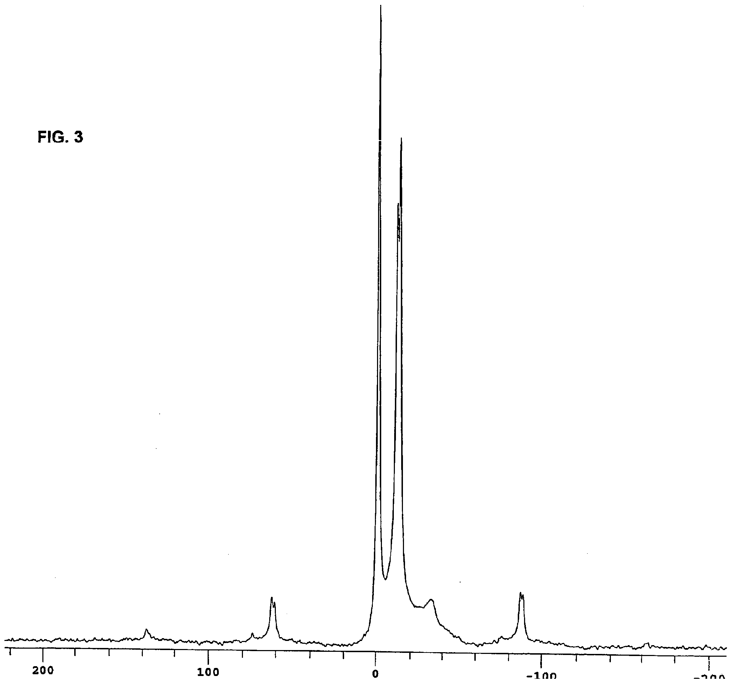

1180g of $CaCh.2H_2O$ was dissolved in 5800g of $H_2O$. To this aqueous solution was added 1800g ZSM-5. The resulting slurry was mixed and heated to 80°C for one hour. 807g of phosphoric acid was then added and stirred. 1666g of clay was added to the slurry and mixed for five minutes prior to milling the slurry. The slurry was milled. The pH of the slurry was 0.55. The resulting milled slurry was then spray dried at an inlet temperature and outlet temperature of 399°C and 149°C, respectively to form particles having a mean particle size reported in Table 1. The spray dried catalyst particles were then calcined for forty minutes at 593°C in a lab muffle. The content of the catalyst prepared in this example and various properties of the catalyst, such as average (mean) particle size, average bulk density, etc., are provided in Table 1 below. The sample was also subjected to NMR analysis according to conditions described in Example 1. The results appear in FIG. 3.

Example 3-Preparation of a Calcium Phosphate Bound Zeolite (12% Phosphoric Acid)

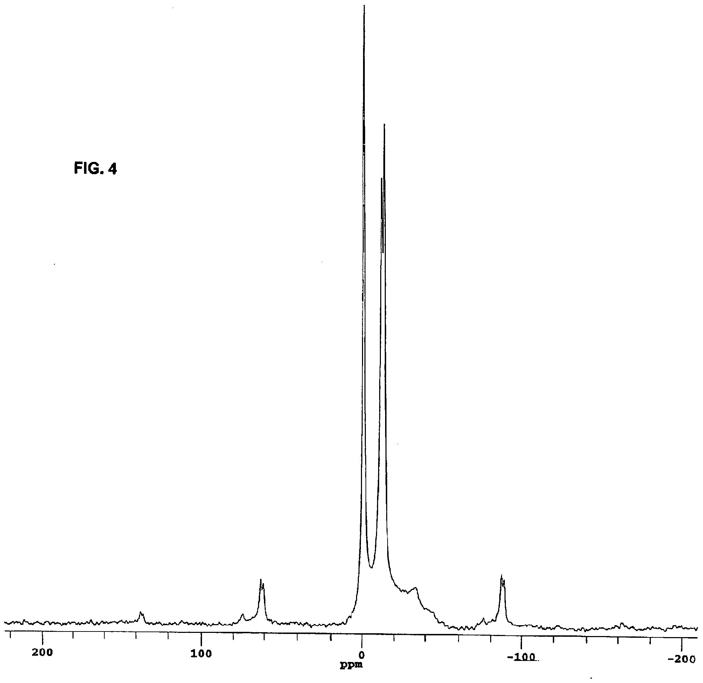

Example 2 was repeated, but with a slightly less concentrated phosphoric acid solution. More particularly, 1311g of $CaCl_2.2H_2O$ was dissolved in 7000g $H_2O$. To this solution was added 2000g ZSM-5. The resulting slurry was mixed and heated to 80°C for one hour. 828g of phosphoric acid was then added and stirred. 1900g of clay was added to the slurry and mixed for five minutes prior to milling the slurry. The slurry was milled. The pH of the slurry was 0.10. The resulting milled slurry was then spray dried at an inlet temperature and outlet temperature of 399°C and 149°C, respectively to form particles having a mean particle size reported in Table 1. The spray dried catalyst particles were then calcined for forty minutes at 593°C in a lab muffle. The content of the catalyst prepared in this example and various properties of the catalyst, such as average (mean) particle size, average bulk density, etc., are provided in Table 1 below. The sample was also subjected to NMR analysis according to conditions described in Example 1. The results appear in FIG. 4.

Example 4-Preparation of a Calcium Phosphate Bound Zeolite (7.7% Phosphoric Acid)

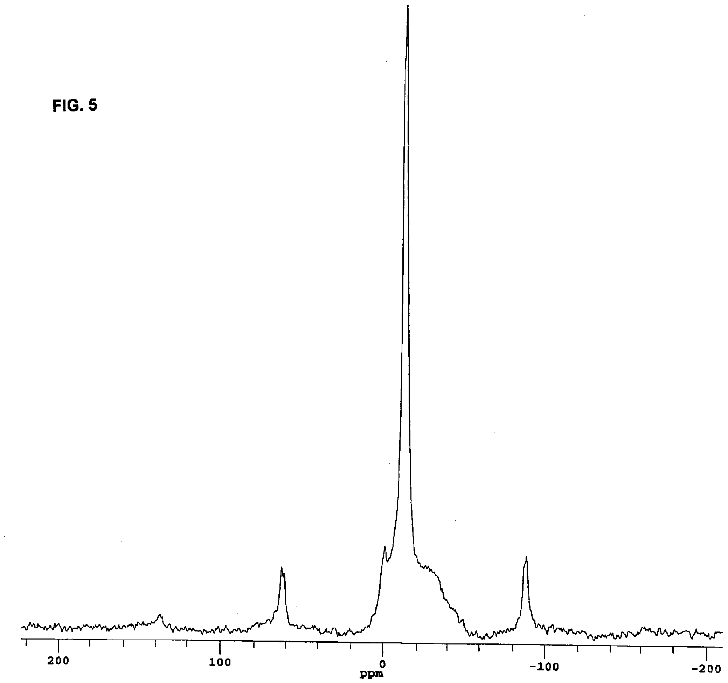

Example 2 was repeated except the concentration of phosphoric acid was significantly reduced to 7.7%. More particularly, 656g of $CaCl_2.H_2O$ was dissolved in 6268g $H_2O$. To this solution. was added 2000g ZSM-5. The resulting slurry was mixed and heated to 80°C for one hour. 531g of phosphoric acid was then added and stirred. 2365g of clay was added to the slurry and mixed for five minutes prior to milling the slurry. The slurry was milled. The pH of the slurry was 1.41. The resulting milled slurry was then spray dried at an inlet temperature and outlet temperature of 399°C and 149°C, respectively to form particles having a mean particle size reported in Table 1. The spray dried catalyst particles were then calcined for forty minutes at 593°C in a lab muffle. The content of the catalyst prepared in this example and various properties of the catalyst, such as average (mean) particle size, average bulk density, etc., are provided in Table 1 below. The sample was also subjected to NMR analysis according to conditions described in Example 1. The results appear in FIG. 5.

Example 5 (Comparison)-Preparation of a Aluminum Phosphate Bound Zeolite

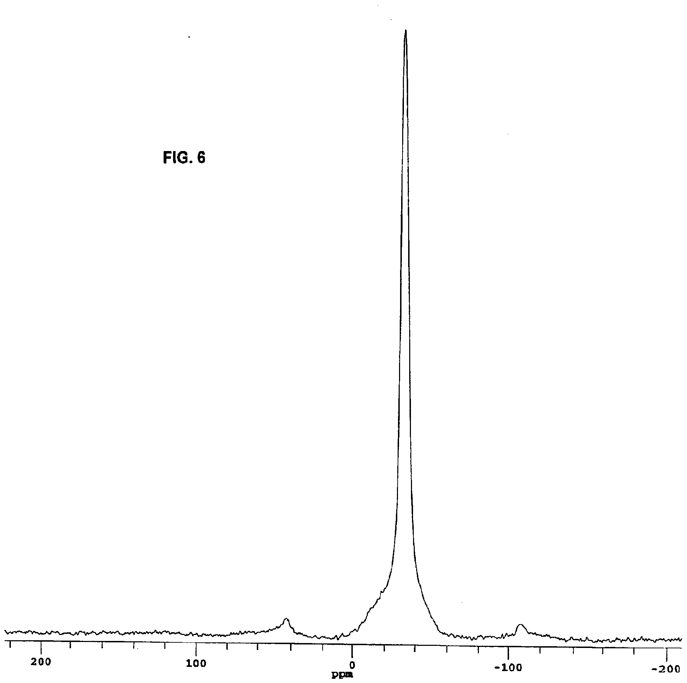

1184g of $AlCl_3.6H_2O$ was dissolved in 5676g $H_2O$. To this solution was added 2000g ZSM-5. The resulting slurry was mixed and heated to 80°C for one hour. 725g of phosphoric acid was then added and stirred. 2225g of clay was added to the slurry and mixed for five minutes prior to milling the slurry. The slurry was milled. The pH of the slurry was 1.24. The resulting milled slurry was then spray dried at an inlet temperature and outlet temperature of 399°C and 149°C, respectively to form particles having a mean particle size reported in Table 1. The spray dried catalyst particles were then calcined for forty minutes at 593°C in a lab muffle. The content of the catalyst prepared in this example and various properties of the catalyst, such as average (mean) particle size, average bulk density, etc., are provided in Table 1 below. The sample was also subjected to NMR analysis according to conditions described in Example 1. The results appear in FIG. 6

Example 6 (Reference)-Preparation of a Strontium Phosphate Bound Zeolite

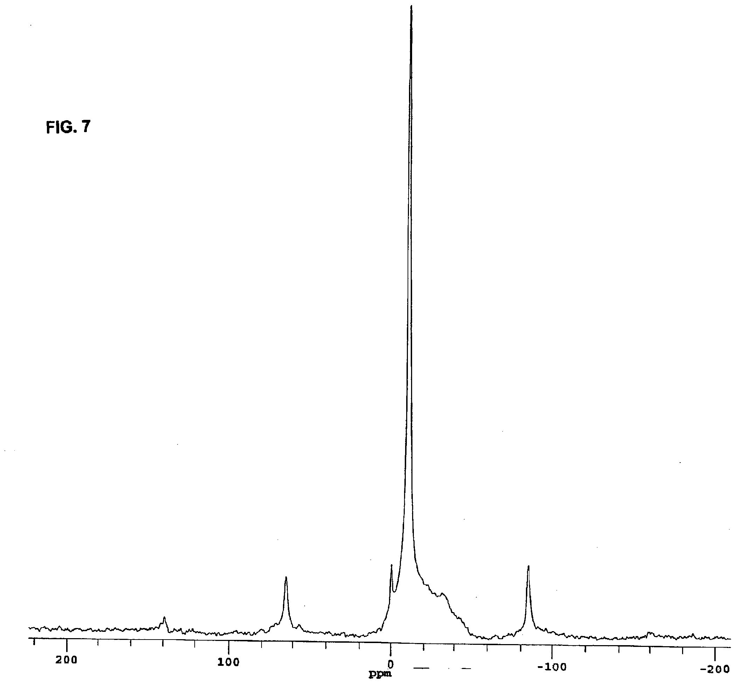

1072g of $SrCl_2.6H_2O$ was dissolved in 5800g of $H_2O$. To this solution was added 1666g ZSM-5. The resulting slurry was mixed and heated to 80°C for one hour. 1166g of phosphoric acid was then added and stirred. 1746g of clay was added to the slurry and mixed for five minutes prior to milling the slurry. The slurry was milled. The pH of the slurry was 0.26. The resulting milled slurry was then spray dried at an inlet temperature and outlet temperature of 399°C and 149°C, respectively to form particles having a mean particle size reported in Table 1. The spray dried catalyst particles were then calcined for forty minutes at 593°C in a lab muffle. The content of the catalyst prepared in this example and various properties of the catalyst, such as average (mean) particle size, average bulk density, etc., are provided in Table 1 below. The sample was also subjected to NMR analysis according to conditions described in Example 1. The results appear in FIG. 7.

Example 7-Preparation of a Lanthanum Phosphate Bound Zeolite

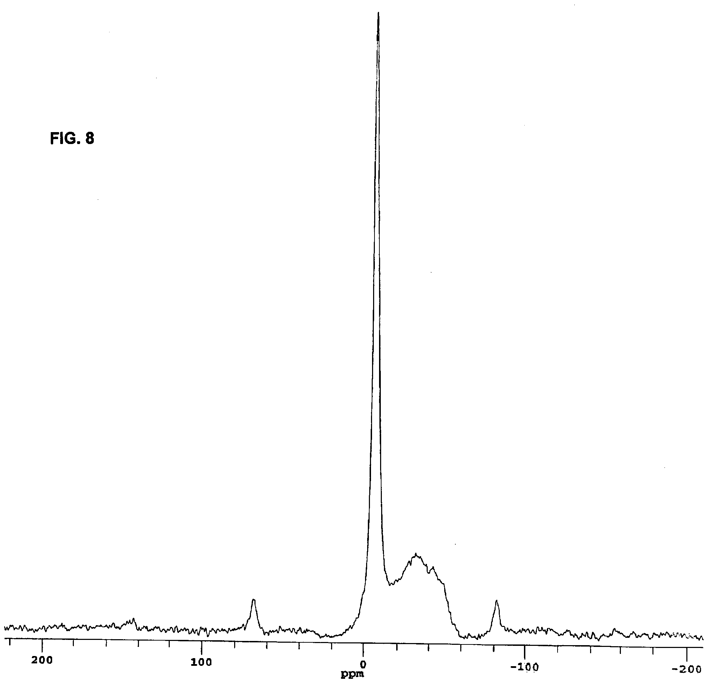

1140g of $LaCl_3.6H_2O$ was dissolved in 7000g of $H_2O$. To this solution was added 2000g ZSM-5. The resulting slurry was mixed and heated to 80°C for one hour. 545g of phosphoric acid was then added and stirred. 2105g of clay was added to the slurry and mixed for five minutes prior to milling the slurry. The slurry was milled. The pH of the slurry was 0.18. The resulting milled slurry was then spray dried at an inlet temperature and outlet temperature of 399°C and 149°C, respectively to form particles having a mean particle size reported in Table 1. The spray dried catalyst particles were then calcined for forty minutes at 593°C in a lab muffle. The content of the catalyst prepared in this example and various properties of the catalyst, such as average (mean) particle size, average bulk density, etc., are provided in Table 1 below. The sample was also subjected to NMR analysis according to conditions described in Example 1. The results appear in FIG. 8.

Example 8 (Reference)-Preparation of a Magnesium Phosphate Bound Zeolite

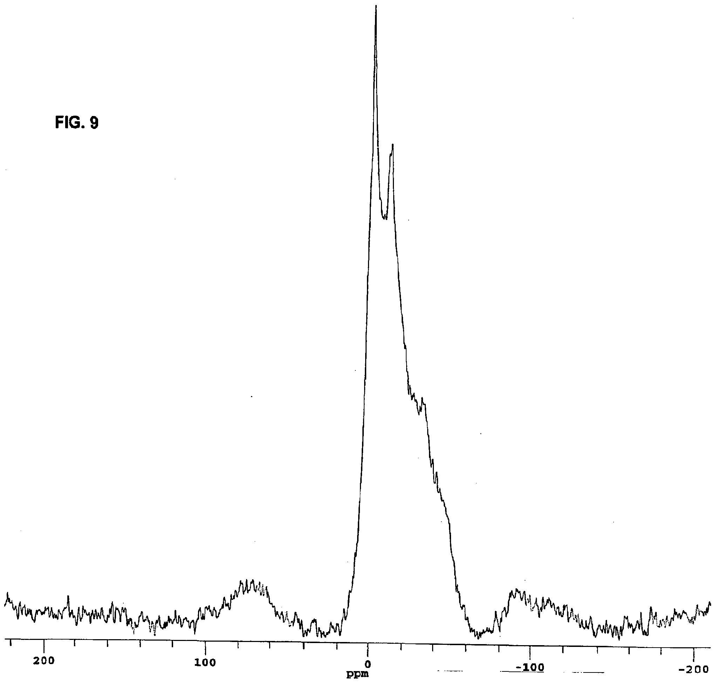

1261g of $MgCl_2.6H_2O$ was dissolved in 5625g of $H_2O$. To this solution was added 2000g ZSM-5. The resulting slurry was mixed and heated to 80°C for one hour. 649g of phosphoric acid was then added and stirred. 2280g of clay was added to the slurry and mixed for five minutes prior to milling the slurry. The slurry was milled. The pH of the slurry was 1.22. The resulting milled slurry was then spray dried at an inlet temperature and outlet temperature of 399°C and 149°C, respectively to form particles having a mean particle size reported in Table 1. The spray dried catalyst particles were then calcined for forty minutes at 593°C in a lab muffle. The content of the catalyst prepared in this example and various properties of the catalyst, such as average (mean) particle size, average bulk density, etc., are provided in Table 1 below. The sample was also subjected to NMR analysis according to conditions described in Example 1. The results appear in FIG. 9.

Example 9- Olefin Yields Obtained Using the Invention

Each of the catalysts prepared in Examples 1-8, and two commercially available catalysts, were tested for olefin production in a Davison Circulating Riser that is designed to simulate the conditions of a conventional FCC unit. The description and operation of the DCR has been published in the following papers: G. W. Young, G. D. Weatherbee, and S. W. Davey, "Simulating Commercial FCCU Yields With The Davison Circulating Riser (DCR) Pilot Plant Unit," National Petroleum Refiners Association (NPRA) Paper AM88-52; G. W. Young, "Realistic Assessment of FCC Catalyst Performance in the Laboratory," in Fluid Catalytic Cracking: Science and Technology, J. S. Magee and M. M. Mitchell, Jr. Eds. Studies in Surface Science and Catalysis Volume 76, p. 257, Elsevier Science Publishers B.V., Amsterdam 1993, ISBN 0-444-89037-8.

The inventive catalysts were tested with conventional faujasite-based catalyst, i.e., Aurora 168 LLIM catalyst. Each of the catalysts described in Examples 1-8 were blended with the aforementioned Aurora product at a level of 8% by weight. These blends were compared against the same Aurora product without the invention, as well as compared against the Aurora product containing 8% by weight of OlefinsUltra™ catalyst, an olefins catalyst commercially available from W.R. Grace & Co.-Conn. All of the catalysts were steamed in a fluidized bed for 4 hours at 816°C under 100% steam atmosphere before evaluation. The reactor/stripper temperature of the DCR was 521°C. The regenerator was operated at 704°C and full burn with 1% excess $O_2$. The feed was heated between 149°C and 371°C to obtain different conversions. The feed used had properties indicated in Table 2 below. The octane number results are generated using G-Con™ analysis, which has been described in "Fluid Catalytic Cracking": Science and Technology, Vol. 76, p. 279, Ed. Mageland Mitchell.

The interpolated results of the DCR testing are provided in Table 3 below. The parameters marked with the double asterisks (**) are those used to measure the performance of the catalysts relative to light olefins production. It is shown that the catalyst compositions of this invention provide additional compositions for making olefins and in at least one embodiment (Example 1), provides a catalyst having enhanced production compared to standard catalyst (Aurora), a commercially available olefins catalyst (Olefins Ultra) and an aluminum phosphate bound catalyst made according to U.S. Patent 5,194,412 (Example 5).

The RON results below also indicate that a refiner can use the invention to manipulate and/or enhance olefin yields and at the same time produce higher octane gasoline, albeit at lower gasoline yields.

Table 3 below also includes a complete listing of yields of other products from cracking the hydrocarbon feedstream. The yields reported were obtained using gas chromatography.

Table 1

| EXAMPLE | Comparison | 1 | 2 | 3 | 4 | 5 (Comp) | 6 (Ref) | 7 | 8 (Ref) |
|---|---|---|---|---|---|---|---|---|---|
|  | OlefinsUltra[1] | 40% ZSM5 | 40% ZSM5 | 40% ZSM5 | 40% ZSM5 | 40% ZSM5 | 40% ZSM5 | 40% ZSM5 | 40% ZSM5 |
|  |  | 10% Fe2O3 | 10% CaO | 10% CaO | 5% CaO | 5% Al2O3 | 10% SrO | 10% $La_2O_3$ | 5% MgO |
|  |  | (FeCl3) | (CaCl2) | (CaCl2) | (CaCl2) | (AlCl3) | (SrCl2) | (LaCl3) | (MgCl2) |
|  |  | 1Hr. @ 80C | 1Hr. @ 80C | 1Hr. @ 80C | 1Hr. @ 80C | 1Hr. @ 80C | 1Hr. @ 80C | 1Hr. @ 80C | 1Hr. @ 80C |
|  |  | 12.4%P2O5 | 13%P2O5 | 12%P2O5 | 7.7% P2O5 | 10.5% P2O5 | 8.1%P2O5 | 7.9%P2O5 | 9.4% P2O5 |
|  |  | (H3PO4) | (H3PO4) | (H3PO4) | (H3PO4) | (H3PO4) | (H3PO4) | (H3PO4) | (H3PO4) |
|  |  | 37.6% Clay[2] | 37% Clay | 38% Clay | 47.3% Clay | 44.5% Clay | 41.9% Clay | 42.1% Clay | 45.6% Clay |
| Al2O3 | 27 | 18.1 | 18.4 | 18.4 | 22 | 26.2 | 20.1 | 20.3 | 21.9 |
| Na2O | 0.17 | 0.11 | 0.14 | 0.13 | 0.1 | 0.1 | 0.13 | 0.11 | 0.12 |
| MgO | 0.06 | 0.06 | 0.07 | 0.06 | 0.06 | 0.36 | 0.06 | 0.06 | 4.56 |
| CaO | 0.07 | 0.11 | 8.59 | 8.64 | 4.84 | 0.14 | 0.11 | 0.11 | 0.54 |
| SrO[3] |  |  |  |  |  |  | 9.28 |  |  |
| Fe2O3 | 0.59 | 10.42 | 0.56 | 0.6 | 0.71 | 0.71 | 0.67 | 1.19 | 0.72 |
| $La_2O_3$ | 0.03 | 0.03 | 0.01 | 0.01 | 0.01 | 0.01 | 0.02 | 9.19 | 0.01 |
| P2O5 | 11.6 | 13.33 | 13.29 | 13.01 | 7.69 | 10.24 | 8.92 | 8.99 | 9.26 |
| APS[4] | 71 | 66 | 81 | 77 | 74 | 65 | 69 | 66 | 64 |
| ABD[5] | 0.69 | 0.73 | 0.64 | 0.63 | 0.66 | 0.7 | 0.67 | 0.66 | 0.71 |
| DI[6] | 8 | 10 | 2 | 3 | 3 | 7 | 12 | 5 | 9 |
| Z SA[7] | 122 | 113 | 131 | 119 | 121 | 125 | 121 | 121 | 125 |
| M SA[8] | 24 | 17 | 23 | 34 | 32 | 19 | 30 | 44 | 22 |
| TSA[9] | 166 | 130 | 154 | 153 | 153 | 144 | 151 | 165 | 147 |

4 Hrs. @ 1500F Steam

(continued)

| EXAMPLE | Comparison | 1 | 2 | 3 | 4 | 5 (Comp) | 6 (Ref) | 7 | 8 (Ref) |
|---|---|---|---|---|---|---|---|---|---|
| TSA | 150 | 131 | 132 | 128 | 124 | 137 | 114 | 145 | 89 |

[1] Olefins Ultra ™ additive does not contain a metal phosphate as defined herein and is commercially available from W.R.Grace&Co.-Conn.

[2] Natka clay

[3] Strontium oxide was only measured for the sample from Example 6.

[4] APS=mean particle size as measured by Malvern Mastersizer-S.

[5] ABD=average bulk density

[6] Davison Attrition Index measured as described earlier

[7] zeolite surface area that is determined by t-plot.

[8] matrix surface area as measured by t-plot.

[9] total surface area as measured by BET.

| TABLE 2 | | | | | | |
|---|---|---|---|---|---|---|
| Simulated Distillation. Vol. % °F: | | | | | | |
| API Gravity @ 60°F | 25.5 | A1 ppm: | 0 | | IBP: | 307 |
| Specific Gravity @ 60°F | 0.9012 | Ca ppm: | 0 | | 5 | 513 |
| Aniline Point, °F | 196 | Mg ppm: | 0 | | 10 | 607 |
| Sulfur, Wt.% | 0.396 | Zn ppm: | 0 | | 20 | 691 |
| Total Nitrogen, Wt.% | 0.12 | P ppm: | 0 | | 30 | 740 |
| Basic Nitrogen, Wt.% | 0.05 | Pb ppm: | 0 | | 40 | 782 |
| Conradson Carbon, Wt.% | 0.68 | Cr ppm: | 0 | | 50 | 818 |
| Ni, ppm | 0.4 | Mn ppm: | 0 | | 60 | 859 |
| V, ppm | 0.2 | Sb ppm: | 0 | | 70 | 904 |
| Fe, ppm | 4 | Ba ppm: | 0.1 | | 80 | 959 |
| Cu, ppm | 0 | K ppm: | 0 | | 90 | 1034 |
| Na, ppm | 1.2 | | | | 95 | 1103 |
| Refractive Index | 1.5026 | | | | FPB | 1257 |
| Average Molecular Weight | 406 | | | | PCT | 99.3 |
| % Aromatic Ring Carbons, Ca | 18.9 | | | | | |
| % Paraffinic Carbons, Cp | 63.6 | | | | | |
| Naphthenic Carbons, Cn | 17.4 | | | | | |
| K Factor | 11.94 | | | | | |

Table 3

| Catalyst Composition (% by weight)[10] | Comparison #1 Aurora™-168LLIM[11] (100%) | Comparison #2 Olefins Ultra™ (8%) | Example 1 Ex. 1 (8%) | Example 2 Ex. 2 (8%) | Example 3 Ex. 3 (8%) | Example 4 Ex. 4 (8%) | Example 5 Ex. 5 (8%) | Example 6 Ex. 6 (8%) | Example 7 Ex. 7 (8%) | Example 8 Ex. 8 (8%) |
|---|---|---|---|---|---|---|---|---|---|---|
| Conversion | 70 | 70 | 70 | 70 | 70 | 70 | 70 | 70 | 70 | 70 |
| Activity | 7.07 | 7.62 | 7.32 | 7.79 | 7.11 | 7.64 | 7.48 | 7.39 | 7.08 | 7.29 |
| H2 Yield wt% | 0.03 | 0.03 | 0.05 | 0.03 | 0.04 | 0.03 | 0.03 | 0.03 | 0.05 | 0.03 |
| Cl + C2's wt% | 2.07 | 2.18 | 2.23 | 2.04 | 2.11 | 2.03 | 2.04 | 1.99 | 2.05 | 1.98 |
| C2 wt% | 0.63 | 0.52 | 0.47 | 0.52 | 0.55 | 0.53 | 0.51 | 0.52 | 0.51 | 0.54 |
| **C2= wt% | 0.69 | 0.99 | 1.14 | 0.85 | 0.85 | 0.81 | 0.87 | 0.78 | 0.88 | 0.75 |
| Total C3 wt% | 4.87 | 9.56 | 10.65 | 8.75 | 8.31 | 8.24 | 8.67 | 7.91 | 9.03 | 7.25 |
| **C3= wt% | 4.25 | 8.75 | 9.80 | 8.01 | 7.57 | 7.52 | 7.92 | 7.20 | 8.29 | 6.57 |
| Total C4 wt% | 9.14 | 12.82 | 13.28 | 12.93 | 12.58 | 12.51 | 12.40 | 12.09 | 12.92 | 11.87 |
| iC4 wt% | 1.81 | 2.37 | 2.35 | 2.23 | 2.29 | 2.20 | 2.27 | 2.26 | 2.29 | 2.16 |
| nC4 wt% | 0.41 | 0.49 | 0.50 | 0.46 | 0.47 | 0.45 | 0.47 | 0.46 | 0.47 | 0.45 |
| **Total C4=wt% | 6.90 | 9.98 | 10.55 | 10.30 | 9.74 | 9.83 | 9.77 | 9.56 | 10.26 | 9.23 |
| C4= wt% | 1.36 | 1.84 | 1.93 | 1.87 | 1.78 | 1.80 | 1.78 | 1.77 | 1.84 | 1.69 |
| iC4= wt% | 2.39 | 3.89 | 4.09 | 3.97 | 3.67 | 3.76 | 3.73 | 3.64 | 3.95 | 3.45 |
| tC4= wt% | 1.75 | 2.39 | 2.56 | 2.51 | 2.44 | 2.40 | 2.40 | 2.35 | 2.56 | 2.32 |
| cC4= wt% | 1.32 | 1.81 | 1.92 | 1.90 | 1.79 | 1.82 | 1.80 | 1.75 | 1.85 | 1.70 |
| Gasoline wt% | 51.76 | 43.00 | 40.84 | 43.80 | 45.09 | 44.90 | 44.41 | 45.54 | 43.62 | 46.62 |
| G-Con P wt% | 3.44 | 3.47 | 3.57 | 3.39 | 3.38 | 3.39 | 3.47 | 3.39 | 3.49 | 3.36 |
| G-Con I wt% | 20.07 | 16.24 | 15.45 | 16.23 | 17.07 | 17.03 | 16.88 | 17.51 | 16.88 | 18.07 |
| G-Con A wt% | 29.99 | 34.04 | 35.45 | 32.30 | 32.65 | 32.12 | 33.10 | 32.34 | 33.16 | 32.00 |
| G-Con N wt% | 11.98 | 10.11 | 10.12 | 10.00 | 10.15 | 10.36 | 10.62 | 10.51 | 10.35 | 10.94 |
| G-Con O wt% | 34.94 | 36.36 | 36.03 | 38.58 | 37.71 | 37.53 | 36.75 | 36.63 | 36.54 | 36.59 |

(continued)

| Catalyst Composition (% by weight)[10] | Comparison #1 Aurora™-168LLIM[11] (100%) | Comparison #2 Olefins Ultra™ (8%) | Example 1 Ex. 1 (8%) | Example 2 Ex. 2 (8%) | Example 3 Ex. 3 (8%) | Example 4 Ex. 4 (8%) | Example 5 Ex. 5 (8%) | Example 6 Ex. 6 (8%) | Example 7 Ex. 7 (8%) | Example 8 Ex. 8 (8%) |
|---|---|---|---|---|---|---|---|---|---|---|
| **G-Con RON EST | 92.19 | 94.09 | 94.21 | 94.08 | 93.89 | 93.77 | 93.66 | 93.67 | 93.65 | 93.31 |
| **G-Con MON EST | 78.56 | 79.75 | 79.87 | 79.62 | 79.56 | 79.45 | 79.54 | 79.36 | 79.41 | 79.24 |
| LCO wt% | 22.29 | 21.66 | 21.53 | 21.61 | 21.49 | 21.70 | 21.76 | 21.56 | 21.96 | 21.86 |
| Bottoms wt% | 7.71 | 8.34 | 8.47 | 8.39 | 8.51 | 8.30 | 8.24 | 8.44 | 8.04 | 8.14 |
| Coke wt% | 2.21 | 2.42 | 2.59 | 2.32 | 2.32 | 2.32 | 2.31 | 2.31 | 2.34 | 2.40 |
| **C3=/C4= | 0.62 | 0.88 | 0.93 | 0.78 | 0.78 | 0.77 | 0.81 | 0.75 | 0.81 | 0.71 |

[10] Indicates the amount of component listed, based on total catalyst composition. The first comparison example comprises 100% Aurora 168LLIM catalyst. For the remaining examples OlefinsUltra catalyst and catalysts from Examples 1 - 8 were each separately blended with Aurora catalyst in an amount of 8% by weight of the total composition, and the remaining 92% being the aforementioned Aurora catalyst.
[11] Aurora ™ 1168LLIM catalyst does not contain metal phosphate binder as described herein and is commercially available from W.R. Grace & Co.-Conn.

**Claims**

1. A catalyst composition comprising

   (a) zeolite which is ZSM-5 having a silica to alumina molar ratio of twelve or greater;
   (b) metal phosphate present in an amount of at least 3% by weight of the catalyst composition, as measured by amount of the metal's corresponding oxide in the composition, which amount is sufficient for the metal phosphate to at least function as a binder for the catalyst, and the metal is selected from iron, lanthanum and calcium, wherein the corresponding oxide is $Fe_2O_3$, $La_2O_3$ or CaO; and
   (c) aluminum phosphate; and
   (d) clay

   wherein the catalyst composition is particulated.

2. A catalyst composition according to claim 1 further comprising a member of the group consisting of yttria, lanthana, ceria, neodymia, samaria, europia, gadolinia, titania, zirconia, praseodymia and mixtures thereof.

3. A catalyst composition according to claim 1 comprising kaolin clay having a surface area from 2 to 50 $m^2$/g.

4. A catalyst composition according to claim 1, wherein the composition has a Davison Attrition Index in the range of 0 to 30.

5. A catalyst composition according to claim 4, wherein the composition has a Davison Attrition Index in the range of 0 to 20.

6. A method for catalytic cracking of hydrocarbons that comprises reacting a hydrocarbon under catalytic cracking conditions in the presence of a catalyst composition as defined in any of the preceding claims.

7. A method according to claim 6, wherein the method of catalytic cracking is fluidized.


**Patentansprüche**

1. Katalysatorzusammensetzung, umfassend

   (a) Zeolith, der ZSM-5 ist, der ein Molverhältnis von Siliciumdioxid zu Aluminiumoxid von zwölf oder mehr aufweist;
   (b) Metallphosphat, das in einer Menge von mindestens 3 Gew.-% der Katalysatorzusammensetzung vorliegt, gemessen durch die Menge des entsprechenden Oxids des Metalls in der Zusammensetzung, wobei die Menge ausreichend ist, damit das Metallphosphat mindestens als ein Bindemittel für den Katalysator fungiert, und das Metall aus Eisen, Lanthan und Calcium ausgewählt ist, wobei das entsprechende Oxid $Fe_2O_3$, $La_2O_3$ oder CaO ist; und
   (c) Aluminiumphosphat; und
   (d) Ton

   wobei die Katalysatorzusammensetzung teilchenförmig ist.

2. Katalysatorzusammensetzung nach Anspruch 1, ferner umfassend ein Mitglied der Gruppe, bestehend aus Yttriumoxid, Lanthanoxid, Ceroxid, Neodymoxid, Samariumoxid, Europiumoxid, Gadoliniumoxid, Titandioxid, Zirconiumdioxid, Praseodymoxid und Mischungen davon.

3. Katalysatorzusammensetzung nach Anspruch 1, umfassend Kaolinton, der eine Oberfläche von 2 bis 50 $m^2$/g aufweist.

4. Katalysatorzusammensetzung nach Anspruch 1, wobei die Zusammensetzung einen Davison-Abriebindex in dem Bereich von 0 bis 30 aufweist.

5. Katalysatorzusammensetzung nach Anspruch 4, wobei die Zusammensetzung einen Davison-Abriebindex in dem Bereich von 0 bis 20 aufweist.

6. Verfahren zum katalytischen Cracken von Kohlenwasserstoffen, das ein Umsetzen eines Kohlenwasserstoffs unter katalytischen Crackbedingungen in Gegenwart einer Katalysatorzusammensetzung gemäß einem der vorstehenden Ansprüche umfasst.

7. Verfahren nach Anspruch 6, wobei das Verfahren zum katalytischen Cracken fluidisiert ist.

**Revendications**

1. Composition de catalyseur comprenant

   (a) une zéolite qui est ZSM-5 ayant un rapport molaire de la silice à l'alumine de douze ou plus ;
   (b) un phosphate métallique présent en une quantité d'au moins 3 % en poids de la composition de catalyseur, telle que mesurée par une quantité de l'oxyde correspondant du métal dans la composition, laquelle quantité est suffisante pour que le phosphate métallique fonctionne au moins en tant que liant pour le catalyseur, et le métal est choisi parmi fer, lanthane et calcium, dans lequel l'oxyde correspondant est $Fe_2O_3$, $La_2O_3$ ou CaO ; et
   (c) du phosphate d'aluminium ; et
   (d) de l'argile

   dans laquelle la composition de catalyseur est rendue particulaire.

2. Composition de catalyseur selon la revendication 1 comprenant en outre un membre du groupe constitué d'oxyde d'yttrium, oxyde de lanthane, oxyde de cérium, oxyde de néodyme, oxyde de samarium, oxyde d'europium, oxyde de gadolinium, oxyde de titane, oxyde de zirconium, oxyde de praséodyme et des mélanges de ceux-ci.

3. Composition de catalyseur selon la revendication 1 comprenant de l'argile kaolin ayant une surface spécifique de 2 à 50 $m^2$/g.

4. Composition de catalyseur selon la revendication 1, dans laquelle la composition a un indice d'attrition de Davison dans la plage de 0 à 30.

5. Composition de catalyseur selon la revendication 4, dans laquelle la composition a un indice d'attrition de Davison dans la plage de 0 à 20.

6. Procédé de craquage catalytique d'hydrocarbures qui comprend la réaction d'un hydrocarbure dans des conditions de craquage catalytique en présence d'une composition de catalyseur telle que définie dans l'une quelconque des revendications précédentes.

7. Procédé selon la revendication 6, dans lequel le procédé de craquage catalytique est fluidisé.

```
┌─────────────────┐    ┌─────────────────┐    ┌─────────────────┐
│   Phosphorus    │    │   Metal Salt    │    │    Zeolite      │
│     Source      │    │      (1)        │    │      (2)        │
│      (3)        │    │                 │    │                 │
└────────┬────────┘    └────────┬────────┘    └────────┬────────┘
         │                      │                      │
         └──────────────┐       │       ┌──────────────┘
                        │       │       │
                   ┌────┴───────┴───────┴────┐
                   │ Zeolite/Phosphorus/Metal │
                   │      Salt Solution       │      ┌──────────────────────┐
                   │          (5)             ├──────┤  Clay/Inorganic Oxide │
                   └────────────┬─────────────┘      │         (4)          │
                                │                     └──────────────────────┘
                   ┌────────────┴─────────────┐
                   │      Mixer/Milling        │
                   │          (6)              │
                   └────────────┬─────────────┘
                   ┌────────────┴─────────────┐
                   │    Spray Dryer Feed       │
                   │    Slurry Storage         │
                   │          (7)              │
                   └────────────┬─────────────┘
                   ┌────────────┴─────────────┐
                   │      Spray Dryer          │
                   │          (8)              │
                   └────────────┬─────────────┘
                   ┌────────────┴─────────────┐
                   │        Calciner           │
                   │          (9)              │
                   └────────────┬─────────────┘
                   ┌────────────┴─────────────┐
                   │    FCC Catalyst Storage   │
                   │          (10)             │
                   └───────────────────────────┘
```

# FIG. 1

FIG. 2

EP 1 735 408 B1

FIG. 3

18

FIG. 4

FIG. 5

EP 1 735 408 B1

FIG. 6

EP 1 735 408 B1

**FIG. 7**

FIG. 8

23

FIG. 9

**EP 1 735 408 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3354096 A
- US 3649523 A
- US 4454241 A
- US 4465780 A
- US 4498975 A
- US 4504382 A
- US 4567152 A
- US 4584091 A
- US 4629717 A
- US 4692236 A
- US 4605637 A
- US 4578371 A

- US 4724066 A
- US 4839319 A
- US 4765884 A
- US 4873211 A
- US 5194412 A
- EP 0903178 A
- JP 6170233 A
- EP 0623574 A
- US 6159887 A
- US 5380690 A
- EP 0909582 A
- US 3702886 A

**Non-patent literature cited in the description**

- **G. W. YOUNG ; G. D. WEATHERBEE ; S. W. DAVEY.** Simulating Commercial FCCU Yields With The Davison Circulating Riser (DCR) Pilot Plant Unit. *National Petroleum Refiners Association (NPRA) Paper AM88-52*

- Realistic Assessment of FCC Catalyst Performance in the Laboratory. **G. W. YOUNG.** Fluid Catalytic Cracking: Science and Technology
- Studies in Surface Science and Catalysis. Elsevier Science Publishers B.V, 1993, vol. 76, 257
- Fluid Catalytic Cracking. Science and Technology. vol. 76, 279

25